# EUROPÄISCHE PATENTSCHRIFT

(11) **EP 3 885 312 B1**
(45) Veröffentlichungstag und Bekanntmachung des Hinweises auf die Patenterteilung: **14.12.2022**
(21) Anmeldenummer: 20020136.6
(22) Anmeldetag: 26.03.2020
(51) Int. Cl.: C01B 3/34, B01D 53/047, C01B 3/50, C01B 3/56, F25J 3/02, C01B 32/40, C01B 3/38

(54) **VERFAHREN UND ANLAGE ZUM HERSTELLEN VON REINEM KOHLENMONOXID UND WASSERSTOFF**
PROCESS AND PLANT FOR PRODUCING PURE CARBON MONOXIDE AND HYDROGEN
PROCÉDÉ ET SYSTÈME DE FABRICATION DE MONOXYDE DE CARBONE PUR ET D'HYDROGÈNE

(43) Veröffentlichungstag der Anmeldung: 29.09.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: TADIELLO, Jean-Philippe, 60439 Frankfurt a. M. (DE); CHEN, Yue, 200233 Shanghai (CN)
(74) Vertreter: Dropsch, Holger

(56) Entgegenhaltungen:
- DE-A1-102007 059 543
- US-B1- 6 232 352
- US-B2- 8 888 873
- US-B2- 9 512 004

## Beschreibung

### Gebiet der Erfindung

Die Erfindung betrifft ein Verfahren und eine Anlage zum Herstellen von reinem Kohlenmonoxid und Wasserstoff mittels Dampfreformierung von Kohlenwasserstoffen, vorzugsweise Methan oder Naphtha, zu einem Rohsynthesegas und nachfolgender, mehrstufiger Aufarbeitung, Reinigung und Fraktionierung des Rohsynthesegases zu den Zielprodukten, wobei auch die als Nebenprodukte der Verfahrenskette erhaltenen Stoffströme sinnvoll genutzt werden sollen.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend. Weitere bedeutende Verfahren zur Synthesegaserzeugung sind beispielsweise die autotherme Refomierung (ATR) und die partielle, nichtkatalytische (POX) oder katalytische Oxidation von Kohlenwasserstoffen.

Nach Vorerhitzung durch Wärmetauscher oder befeuerte Heizer auf eine Temperatur oberhalb von ca. 500 °C, beispielsweise bis zu 650 °C, tritt das Kohlenwasserstoff-DampfGemisch nach Enderhitzung auf ca. 800 bis 950 °C in die Reformerrohre des Dampfreformers ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern im indirekten Wärmetausch gegen aufzuheizende Prozessmedien teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

Die weitere Aufbereitung des erzeugten, teilabgekühlten Rohsynthesegases umfasst oft auch ein Verfahren zur Abtrennung weiterer unerwünschter Begleitstoffe, beispielsweise mittels physikalischer oder chemischer Absorption oder Gaswäsche. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS), Cyanwasserstoff (HCN) oder Mercaptane (RSH), von den erwünschten Synthesegasbestandteilen Wasserstoff und Kohlenmonoxid sicher bis in den Spurenbereich entfernt werden. Ein bekanntes und häufig angewendetes Verfahren ist das Rectisol-Verfahren, das eine Wäsche des Rohsynthesegases mit tiefkaltem Methanol als Absorbens umfasst und ebenfalls im oben genannten Schrifttum grundsätzlich beschrieben wird. Andere Waschverfahren bedienen sich anderer Wasch- oder Absorptionsmittel, beispielsweise N-Methylpyrrolidon (NMP), sekundäre Amine, z. B. Diethanolamin, tertiäre Amine, z. B. Methyldiethanolamin (MDEA), Polyethylenglycol-dialkylether, z. B. Polyethylenglycol-dimethylether. Das auf diesem Wege abgetrennte Kohlendioxid kann ganz oder teilweise zu der Synthesegaserzeugung, beispielsweise der Dampfreformierung, zurückgeführt werden, um es stofflich zu nutzen und das H₂/CO-Molverhältnis zu senken. Dies ist insbesondere dann erwünscht, wenn Kohlenmonoxid eines der Zielprodukte des Verfahrens ist. Vorrichtungen, die nach einem Verfahren dieser Art betrieben werden, werden nachfolgend verallgemeinernd als Kohlendioxidabtrennungseinheit bezeichnet. Die hierbei spezifisch anzuwendenden Verfahrensbedingungen, deren Auswahl dem Fachmann geläufig ist, werden nachfolgend als Kohlendioxidabtrennungsbedingungen bezeichnet.

Zur Entfernung von Methan und Spuren höherer Kohlenwasserstoffe sowie zur Trennung von Kohlenmonoxid und Wasserstoff kann eine mehrstufige kryogene Gaszerlegung eingesetzt werden, die wegen der gemeinsamen Anordnung der einzelnen Trennstufen in einem gegenüber der Umgebung wärmeisolierten Gehäuse auch als Coldbox bezeichnet wird. Bei dieser wird hauptsächlich flüssiges Methan oder flüssiger Stickstoff verwendet, um höher siedende Gase wie Kohlenmonoxid zu absorbieren. Details der angewendeten Verfahren finden sich beispielsweise in dem Fachbuch Häring "Industrial Gases Processing", Kapitel 5.2.3.6 "Cryogenic Separation Processes", Häring, H.-W. (ed.), WILEY-VCH, Weinheim (2008). Abhängig von der Zusammensetzung des Synthesegases werden technisch zwei verschiedene Verfahren zur Trennung des rohen Synthesegases in die Komponenten H₂ und CO angewendet, nämlich das Kondensationsverfahren oder die Methan-Wäsche.

Beim Kondensationsverfahren wird das getrocknete Rohsynthesegas mittels Wärmetauschern so weit abgekühlt, dass die Gasphase, der Rohwasserstoff, mittels eines Abscheiders von der CO/Methan-reichen Flüssigphase abgetrennt werden kann. Die zur Kühlung erforderliche "Kälte" wird durch den zu erwärmenden Rohwasserstoff und das verdampfende CO bereitgestellt. In der nachfolgenden Wasserstoff-Strippkolonne wird der noch in der flüssigen Phase gelöste Wasserstoff abgetrennt. Das somit von H₂ befreite CO/Methan-Gemisch wird in einer zweiten Kolonne durch Tieftemperatur-Destillation aufgetrennt, wobei als Kopfprodukt Rein-CO und als Sumpfprodukt Methan erhalten wird. Als Mischung aus dem Kopfprodukt der Wasserstoff-Strippkolonne und dem Boden der Sumpfprodukt der CO/Methan-Destillationskolonne fällt ein Abgas mit niedrigem Druck an, das sich als Brenngas eignet. Der Rohwasserstoff kann in einer PSA-Anlage weiter gereinigt werden. Das Kondensationsverfahren wird vorzugsweise zur Auftrennung von CO-reichen Hochdruck-Synthesegasen mit niedrigem Methangehalt eingesetzt, die beispielsweise aus der Partialoxidation von Kohlenwasserstoffen erhalten werden.

Vorrichtungen, die nach einem Verfahren der kryogene Gaszerlegung betrieben werden, werden nachfolgend verallgemeinernd als Tieftemperaturfraktionierungseinheit bezeichnet. Die hierbei spezifisch anzuwendenden Verfahrensbedingungen, deren Auswahl dem Fachmann geläufig ist, werden nachfolgend als Tieftemperaturfraktionierungsbedingungen bezeichnet.

Für Rohsynthesegas aus Steamreformern mit einem höheren H₂/CO-Verhältnis und einem höheren Restmethangehalt ist die Methanwäsche zur Gewinnung von reinem CO und Rohwasserstoff besser geeignet als das Kondensationsverfahren. Dabei wird in einer ersten, der sogenannten Waschkolonne, der größte Teil des Wasserstoffs aus dem abgekühlten Rohsynthesegas durch Auswaschen der anderen Komponenten abgetrennt. Als Lösungsmittel wird dabei unterkühltes und hochreines, flüssiges Methan verwendet, das zur Abfuhr der Lösungswärme mit verdampfendem CO gekühlt wird. In der nachfolgenden Wasserstoff-Strippkolonne wird das Sumpfprodukt der Waschkolonne von dem noch gelösten Wasserstoff befreit. Das CO/Methan-Sumpfprodukt der Wasserstoff-Strippkolonne wird in der nachfolgenden CO/Methan-Destillationskolonne aufgetrennt, wobei als Kopfprodukt Rein-CO und als Sumpfprodukt Methan erhalten wird. Die CO-Reinheit am Kopf dieser Kolonne wird über das Rücklaufverhältnis von unterkühltem reinen CO eingestellt. Überschüssiges Methan wird bei niedrigem Druck zusammen mit dem Kopfprodukt der Wasserstoff-Strippkolonne freigesetzt und beispielsweise als Brenngas verwendet.

Um eine Verstopfung der in der Coldbox enthaltenen Verfahrensstufen durch Eisbildung zu vermeiden, wird dieser üblicherweise ein Trockner und/oder Adsorber vorgeschaltet, der mit einem geeigneten Adsorbens beispielsweise auf Basis von Molekularsieben gefüllt ist und mit dessen Hilfe Wasseranteile sowie weitere unerwünschte Spurenverunreinigungen abgetrennt werden können.

Das aus der Coldbox ausgeleitete Kohlenmonoxid kann als Reinprodukt an Verbraucher abgegeben werden.

Zur Herstellung von Reinwasserstoff folgt als abschließender Schritt üblicherweise die Behandlung des Rohwasserstoffstroms in einer Anlage zur Druckwechseladsorption (pressure swing adsorption, PSA), deren grundsätzliche Eigenschaften in dem Buch "Gasification", C. Higman und M. van der Burgt, Kapitel 8.2.3 "Adsorption systems", Gulf Professional Publishing (2003), dargestellt werden. Die Druckwechseladsorption verwendet Molekularsiebe als Adsorbentien in einer Reihe von Behältern, die in einem gestaffelten zyklischen Modus betrieben werden, der zwischen einer Adsorptionsphase und verschiedenen Phasen der Regeneration wechselt. Es kann eine sehr hohe Reinheit erreicht werden, mit etwa 50 ppm Argon und weniger als 10 ppm anderer Verunreinigungen.

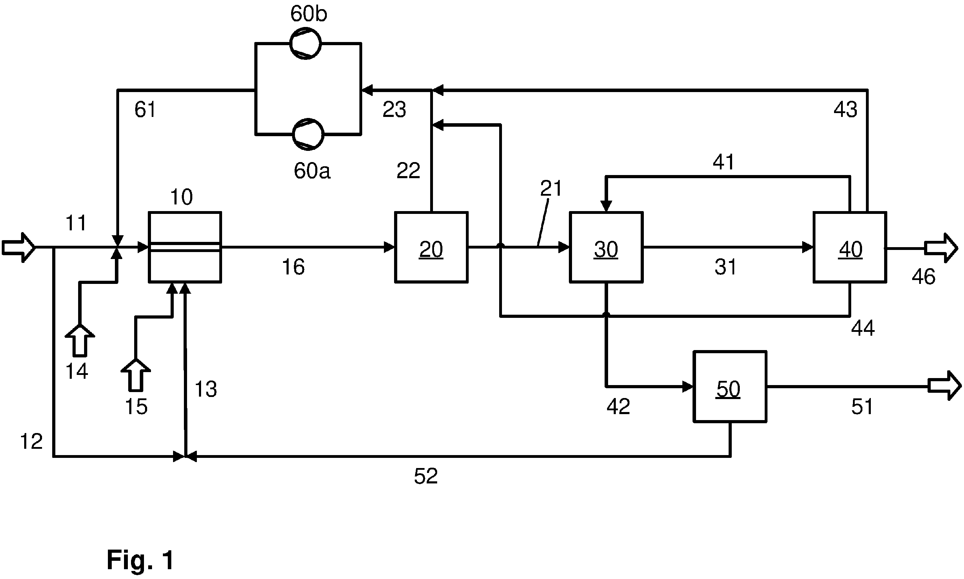

Die US-Patentschrift US 8 888 873 B2 offenbart exemplarisch eine solche Synthesegaserzeugung und Synthesegasaufbereitung mit den Verfahrensstufen Synthesegaserzeugung - Sauergas-(CO₂)-Abtrennung - Trocknung und Adsorption von Störkomponenten - Tieftemperaturzerlegung des Synthesegases in einer Coldbox. Es wird insbesondere auf die dortige Fig. 1 sowie die zugehörige Figurenbeschreibung verwiesen. Dabei wird offenbart, dass ein CO₂-reicher Strom aus der CO₂-Abtrennungsstufe und/oder Gasströme aus der Tieftemperaturzerlegung, die Wasserstoff, Kohlenmonoxid und/oder Methan enthalten, mittels eines oder mehrerer Verdichter zu der Synthesegaserzeugungsstufe zurückgeführt werden und somit besser stofflich genutzt werden können.

Die US-Patentschrift US 9 512 004 B2 offenbart ebenfalls eine Verfahrenskette der geschilderten Art. Gelehrt wird hierbei die Verwendung eines Kreislaufverdichters zur Realisierung folgender unterschiedlicher Betriebsweisen:
(a) in einer ersten Betriebsart wird aus dem Synthesegas abgetrenntes Kohlendioxid zumindest teilweise dem kohlenwasserstoffreichen Einsatz (b) beigemischt,
(b) in einer zweiten Betriebsart wird mittels des Kreislaufverdichters das in der Druckwechseladsorptionsanlage abgetrennte Restgas zumindest teilweise der wasserstoffreichen Fraktion stromaufwärts der Druckwechseladsorptionsanlage beigemischt.
Nachteilig ist es dabei, dass der Kreislaufverdichter jeweils nur für eine der beschriebenen Betriebsarten eingesetzt werden kann.

Um eine Abdeckung weiter Kapazitätsbereiche der Synthesegaserzeugungsanlage zu ermöglichen, wird der Kreislaufverdichter oft mehrstufig ausgeführt, wobei mehrere Verdichterstufen mit einer Teilkapazität parallel angeordnet werden. So ermöglicht eine Ausgestaltung des Kreislaufverdichters mit beispielsweise drei parallelen Verdichterstufen mit jeweils 50 % der Nennkapazität einen Kapazitätsbereich zwischen 50 % und 150 % und somit einen sehr flexiblen Betrieb der Synthesegaserzeugungsanlage. Nachteilig ist es dabei allerdings, dass - außer bei einem Betrieb mit 150 % der Nennkapazität - eine oder sogar zwei der parallelen Verdichterstufen ungenutzt bleiben und somit totes Kapital bilden.

Es besteht daher weiterhin Bedarf an Verfahren zur Erzeugung von Reinkohlenmonoxid und Reinwasserstoff, die einen weiten Bereich unterschiedlicher Produktionskapazitäten abdecken und dabei gleichzeitig die in den Nebenproduktströmen enthaltenen Komponenten optimal stofflich nutzen.

### Beschreibung der Erfindung

Die Aufgabe der vorliegenden Erfindung besteht daher darin, ein Verfahren und eine Anlage zum Herstellen von reinem Kohlenmonoxid und von Wasserstoff anzugeben, die die erwähnten Nachteile des Stands der Technik nicht aufweisen.

Diese Aufgabe wird in einem ersten Aspekt durch ein Verfahren mit den Merkmalen des Anspruchs 1 und mit einer Anlage mit den Merkmalen des Anspruchs 10 gelöst. Weitere Ausgestaltungen der Erfindung ergeben sich aus den Unteransprüchen der jeweiligen Kategorie.

Die Dampfreformierungsbedingungen sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten erzielt wird. Notwendige Anpassungen dieser Bedingungen an die jeweiligen Betriebserfordernisse wird er auf der Grundlage von Routineversuchen vor-nehmen. Dabei können ggf. offenbarte, spezifische Reaktionsbedingungen als Orientierung dienen, sie sind aber in Bezug auf den Umfang der Erfindung nicht einschränkend zu verstehen.

Unter einem Aufteilen oder Auftrennen bzw. Abtrennen eines Stoffstroms ist im Zusammenhang mit der vorliegenden Erfindung die Erzeugung mindestens zweier Teilströme aus dem ursprünglichen Stoffstrom zu verstehen, wobei mit dem Auftrennen bzw. Abtrennen eine beabsichtigte Änderung der stofflichen Zusammensetzung der erhaltenen Teilströme in Bezug auf den ursprünglichen Stoffstrom verbunden ist, beispielsweise durch Anwendung eines thermischen Trennverfahrens auf den ursprünglichen Stoffstrom. Dagegen ist mit dem Aufteilen des ursprünglichen Stoffstroms in der Regel keine Änderung der stofflichen Zusammensetzung der erhaltenen Teilströme verbunden.

Unter einem Anreichern oder Abreichern einer Komponente in einem Gemisch, einer Fraktion oder einem Stoffstrom ist eine Maßnahme, Arbeitsschritt oder Verfahrensschritt zu verstehen, der dazu führt, dass sich der Stoffmengenanteil (Molenbruch) oder Massenanteil (Massenbruch) dieser Komponente erhöht (Anreichern) oder erniedrigt (Abreichern).

Unter dem überwiegenden Teil einer Fraktion, eines Stoffstroms etc. ist ein Anteil zu verstehen, der mengenmäßig größer ist als alle anderen jeweils für sich betrachteten Anteile. Insbesondere bei binären Gemischen oder bei der Auftrennung einer Fraktion in zwei Teile ist darunter ein Anteil von mehr als 50 Gew.-% zu verstehen, sofern im konkreten Fall nichts anderes angegeben ist.

Unter der Angabe, dass ein Stoffstrom überwiegend aus einer Komponente oder Komponentengruppe besteht, ist zu verstehen, dass der Stoffmengenanteil (Molenbruch) oder Massenanteil (Massenbruch) dieser Komponente oder Komponentengruppe mengenmäßig größer ist als alle anderen jeweils für sich betrachteten Anteile anderer Komponenten oder Komponentengruppen in dem Stoffstrom. Insbesondere bei binären Gemischen ist darunter ein Anteil von mehr als 50 % zu verstehen. Sofern im konkreten Fall nichts anderes angegeben ist, wird hierbei der Massenanteil (Massenbruch) zugrunde gelegt.

Die Angabe, dass ein Stoffstrom direkt einer spezifischen Verfahrensstufe oder einem spezifischen Anlagenteil zugeführt wird, ist so zu verstehen, dass der Stoffstrom in diese Verfahrensstufe oder diesen Anlagenteil eingeleitet wird, ohne dass zuvor ein Durchleiten durch andere Verfahrensstufen oder Anlagenteile erfolgte, mit Ausnahme reiner Transportvorgänge und der dazu benötigten Mittel, beispielsweise Rohrleitungen, Ventile, Pumpen, Verdichter, Vorratsbehälter.

Alle etwaigen Druckangaben erfolgen als Absolutdruckeinheiten, abgekürzt bara, oder als Überdruckeinheiten, abgekürzt barg, wenn im jeweiligen Einzelzusammenhang nichts anderes angegeben wird.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, von direkt dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Unter der Angabe, dass zwei oder mehrere Verdichterstufen parallel geschaltet oder angeordnet sind, ist zu verstehen, dass ein Stoffstrom, der eine der Verdichterstufen durchläuft und dort verdichtet wird, nicht zusätzlich eine der anderen Verdichterstufen durchläuft und dort verdichtet wird, wobei die zwei oder mehreren Verdichterstufen unabhängig voneinander betrieben werden können.

Für die Zwecke dieser Beschreibung ist Dampf synonym mit Wasserdampf zu verstehen, sofern es nicht im Einzelfall anders angegeben wird.

Der Erfindung liegt die Erkenntnis zugrunde, dass bei den bislang aus dem Stand der Technik bekannten Verfahren zum Herstellen von reinem Kohlenmonoxid und Wasserstoff aus Kohlenwasserstoffen mittels Dampfreformierung die Einstellung verschiedener, insbesondere stark unterschiedlicher Produktionskapazitäten Schwierigkeiten bereitet. Ferner werden Stoffströme, die als Nebenproduktströme bei der Aufarbeitung des Rohsynthesegases anfallen, bislang nicht optimal genutzt werden. So wird ein Wasserstoff und weitere brennbare Bestandteile enthaltender Strom, der bei der Reinwasserstofferzeugung mittels PSA als Nebenprodukt erhalten wird, bislang vor allem thermisch als Brenngas für die Brenner in der Dampfreformierungseinheit genutzt. Dasselbe gilt für einen bei der kryogenen Gaszerlegung erhaltenen Mitteldruck-Flashgasstrom, der noch signifikante Anteile an Wasserstoff und Kohlenmonoxid enthält. Ferner ist die Steuerung der in der Coldbox enthaltenen Destillations- und Trennschritte aufwendig, wenn die vorgeschaltete Synthesegas-Produktionsanlage bei deutlich unterschiedlichen, insbesondere bei kleinen Produktionskapazitäten betrieben werden soll.

Die genannten Schwierigkeiten werden mit der Erfindung verringert oder ganz vermieden. Durch das erfindungsgemäße Zuführen mindestens eines Teils eines oder mehrerer Ströme, ausgewählt aus einer Gruppe, umfassend:
- den überwiegend Kohlendioxid enthaltenden Strom,
- den methanhaltigen Fraktioniergasstrom,
- den Kohlenmonoxid und Wasserstoff enthaltenden Flashgasstrom,
zu einer Verdichtereinheit, Ausleiten eines verdichteten ersten Rückführstroms aus der Verdichtereinheit und Rückführen beispielweise zu der Dampfreformierungseinheit wird die stoffliche Nutzung der in dem Rückführstrom enthaltenden Komponenten wie Wasserstoff, Kohlenoxide, insbesondere Kohlenmonoxid, oder Methan verbessert.

Ferner wird durch die erfindungsgemäße Ausgestaltung des Verfahrens oder der Anlage mit mindestens zwei parallel geschalteten Verdichterstufen die einstellbare Produktionskapazitätsspanne deutlich erhöht. So ermöglicht eine Ausgestaltung des Kreislaufverdichters mit beispielsweise drei parallelen Verdichterstufen mit jeweils 50 % der Nennkapazität einen Kapazitätsbereich zwischen 50 % (Teillastbetrieb) und 150 % (Volllastbetrieb) und somit einen sehr flexiblen Betrieb der Synthesegaserzeugungsanlage. Eine Ausgestaltung des Kreislaufverdichters mit zwei parallelen Verdichterstufen mit jeweils 50 % der Nennkapazität eröffnet dagegen einen Kapazitätsbereich zwischen 50 % (Teillastbetrieb) und 100 % (Volllastbetrieb).

Um bei einem Teillastbetrieb die jeweils nicht benötigten Verdichterstufen sinnvoll zu nutzen, ist gemäß der Erfindung vorgesehen, diese Verdichterstufen dazu zu nutzen, einen oder mehrere der bei der Aufarbeitung des Rohsynthesegases anfallenden Nebenproduktströme zu der stromaufwärts der Tieftemperaturfraktionierungseinheit angeordneten-Trocknungseinheit zurückzuführen. Hierdurch wird im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können. Dazu ist es sinnvoll, die beiden oder mehreren Verdichterstufen, die somit unterschiedlichen Aufgaben dienen, durch Vorsehen von Ventilen, Steckscheiben oder ähnlichen Mitteln gasdicht voneinander zu trennen, so dass zwischen ihnen keine direkte Fluidverbindung besteht. Auf diese Weise werden die jeweiligen Stoffströme getrennt gehalten, so dass eine unerwünschte Vermischung vermieden wird, die beispielsweise zu einem Einschleppen von Kohlendioxid in die Tieftemperaturfraktionierungseinheit führen würde, was durch die Bildung von Trockeneis dort zu Verstopfungen führen würde.

### Bevorzugte Ausgestaltungen der Erfindung

Ein zweiter Aspekt des erfindungsgemäßen Verfahrens ist dadurch gekennzeichnet, dass mindestens ein Teil des verdichteten ersten Rückführstroms zu der Dampfreformierungseinheit zurückgeführt, in diese eingeleitet und mindestens teilweise unter Dampfreformierungsbedingungen umgesetzt wird. Auf diese Weise werden in diesen Strömen enthaltene Wertstoffe wie Wasserstoff, Kohlenoxide, insbesondere Kohlenmonoxid, oder Methan, stofflich genutzt. Hierdurch kann - bei gleicher Produktionskapazität an reinem Kohlenmonoxid und Wasserstoff - die Zufuhr an Einsatzstrom-Kohlenwasserstoffen reduziert werden, was zu Einsparungen führt.

Ein dritter Aspekt des erfindungsgemäßen Verfahrens ist dadurch gekennzeichnet, dass mindestens ein Teil des überwiegend Kohlendioxid enthaltenden Stroms zu einer ersten Verdichterstufe zugeführt und verdichtet wird und der verdichtete Strom zu der Dampfreformierungseinheit zurückgeführt, in diese eingeleitet und mindestens teilweise unter Dampfreformierungsbedingungen umgesetzt wird. Auf diese Weise kann das in diesem Strom enthaltene Kohlendioxid stofflich genutzt werden, so dass sich - bei gleicher Produktionskapazität an reinem Kohlenmonoxid und Wasserstoff - die Zufuhr an Einsatzstrom-Kohlenwasserstoffen reduziert. Dies ist im Falle des überwiegend Kohlendioxid enthaltenden Stroms besonders interessant, da er nicht anderweitig, beispielsweise als Brenngas, genutzt werden kann. Ferner erhöht sich die Flexibilität der Verfahrens hinsichtlich des Verhältnisses der erzeugten Zielprodukte Kohlenmonoxid und Wasserstoff: Bei höherer Rückführung von Kohlendioxid wird im Produkt anteilig mehr Kohlenmonoxid erzeugt.

Ein vierter Aspekt des erfindungsgemäßen Verfahrens ist dadurch gekennzeichnet dass, mindestens ein Teil des methanhaltigen Fraktioniergasstroms zu der ersten Verdichterstufe zugeführt und verdichtet wird und der verdichtete Strom zu der Dampfreformierungseinheit zurückgeführt, in diese eingeleitet und mindestens teilweise unter Dampfreformierungsbedingungen umgesetzt wird. Auch dieser Aspekt des erfindungsgemäßen Verfahrens führt zu Einsparungen an Einsatzstrom-Kohlenwasserstoffen bei gleicher Produktionskapazität an reinem Kohlenmonoxid und Wasserstoff.

Ein fünfter Aspekt des erfindungsgemäßen Verfahrens ist dadurch gekennzeichnet, dass mindestens ein Teil des Kohlenmonoxid und Wasserstoff enthaltenden Flashgasstroms zu einer zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Hierdurch wird insbesondere im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können. Die erste, parallel geschaltete Verdichterstufe kann dagegen weiterhin für die Rückführung von Stoffströmen zu der Dampfreformierungseinheit verwendet werden, was zu den beschriebenen Einsparungen an Einsatzstrom-Kohlenwasserstoffen führt.

Ein sechster Aspekt des erfindungsgemäßen Verfahrens ist dadurch gekennzeichnet, dass mindestens ein Teil des Reinkohlenmonoxid-Produktgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Auch hierdurch wird insbesondere im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können. Die erste, parallel geschaltete Verdichterstufe kann dagegen weiterhin für die Rückführung von Stoffströmen zu der Dampfreformierungseinheit verwendet werden, was zu den beschriebenen Einsparungen an Einsatzstrom-Kohlenwasserstoffen führt. Auch eine teilweise, vorzugsweise zeitlich beschränkte Aufzehrung des Reinkohlenmonoxid-Produktgasstroms für den beschriebenen Zweck kann sinnvoll sein, um die Betriebsstabilität der Tieftemperaturfraktionierungseinheit zu gewährleisten. Dies kann insbesondere bei Betriebsstörungen oder Übergängen zwischen verschiedenen Betriebszuständen der Fall sein, in deren Folge es zu einer deutlichen Reduktion des Einsatzstroms in die Tieftemperaturfraktionierungseinheit kommt.

Ein siebter Aspekt des erfindungsgemäßen Verfahrens ist dadurch gekennzeichnet, dass mindestens ein Teil des PSA-Abgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Auch hierdurch wird insbesondere im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können, wohingegen die erste, parallel geschaltete Verdichterstufe weiterhin für die Rückführung von Stoffströmen zu der Dampfreformierungseinheit verwendet werden kann.

Ein achter Aspekt des erfindungsgemäßen Verfahrens ist dadurch gekennzeichnet, dass mindestens ein Teil des überwiegend Kohlendioxid enthaltenden Stroms und mindestens ein Teil des methanhaltigen Fraktioniergasstroms zu einer ersten Verdichterstufe zugeführt und verdichtet werden und der verdichtete Strom zu der Dampfreformierungseinheit zurückgeführt, in diese eingeleitet und mindestens teilweise unter Dampfreformierungsbedingungen umgesetzt wird und dass mindestens ein Teil des Kohlenmonoxid und Wasserstoff enthaltenden Flashgasstroms und mindestens ein Teil des Reinkohlenmonoxid-Produktgasstroms und mindestens ein Teil des PSA-Abgasstroms zu einer zweiten Verdichterstufe zugeführt und verdichtet werden und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Auch hierdurch wird insbesondere im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können, wohingegen die erste, parallel geschaltete Verdichterstufe weiterhin für die Rückführung von Stoffströmen zu der Dampfreformierungseinheit verwendet werden kann. Aufgrund der Vielzahl der in dieser Ausgestaltung möglichen Kombinationen der einzelnen, genannten Stoffströme als Teilströme für den Aufbau der Rückführströme zu der Dampfreformierungseinheit einerseits und zu der Tieftemperaturfraktionierungseinheit andererseits können Wechsel zwischen unterschiedlichen Lastzuständen der Produktionsanlage besonders fein ausgeglichen werden, ohne dass einzelne Verfahrensstufen besonders belastet werden müssen, weil einzelne in sie eintretende oder aus ihr austretende Stoffströme vollständig als Rückführströme genutzt werden, was den konstanten Betrieb dieser Verfahrensstufen beeinträchtigt.

Ein neunter Aspekt des erfindungsgemäßen Verfahrens ist dadurch gekennzeichnet, dass mindestens ein Teil des an Wasserstoff angereicherten Gasstroms zur Regenerierung eines in der Trocknungseinheit angeordneten Trocknungsmittels verwendet wird, bevor er zu der Druckwechseladsorptionseinheit geleitet wird. Auf diese Weise kann eine hohe Verfügbarkeit regenerierten Adsorptions- bzw. Trocknungsmittels in der Trocknungseinheit erreicht werden. Dies gilt insbesondere dann, wenn die Trocknungseinheit mit mehreren, parallel betriebenen Einzelsträngen ausgestaltet ist, von denen sich gleichzeitig mindestens ein Strang im Beladungsmodus und mindestens ein weiterer Strang im Regenerierungsmodus befindet.

In einem weiteren Aspekt ist die erfindungsgemäße Anlage dadurch gekennzeichnet, dass Mittel umfasst werden, die es gestatten, dass mindestens ein Teil des verdichteten ersten Rückführstroms zu der Dampfreformierungseinheit zurückgeführt und in diese eingeleitet wird. Die Vorteile dieses Aspekts der erfindungsgemäße Anlage entsprechen denen des zweiten Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des überwiegend Kohlendioxid enthaltenden Stroms zu einer ersten Verdichterstufe zugeführt und verdichtet wird und der verdichtete Strom zu der Dampfreformierungseinheit zurückgeführt und in diese eingeleitet wird. Die Vorteile dieses Aspekts der erfindungsgemäße Anlage entsprechen denen des dritten Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des methanhaltigen Fraktioniergasstroms zu der ersten Verdichterstufe zugeführt und verdichtet wird und der verdichtete Strom zu der Dampfreformierungseinheit zurückgeführt und in diese eingeleitet wird. Die Vorteile dieses Aspekts der erfindungsgemäße Anlage entsprechen denen des vierten Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des Kohlenmonoxid und Wasserstoff enthaltenden Flashgasstroms zu einer zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Die Vorteile dieses Aspekts der erfindungsgemäße Anlage entsprechen denen des fünften Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des Reinkohlenmonoxid-Produktgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Die Vorteile dieses Aspekts der erfindungsgemäße Anlage entsprechen denen des sechsten Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des PSA-Abgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Die Vorteile dieses Aspekts der erfindungsgemäße Anlage entsprechen denen des siebten Aspekts des erfindungsgemäßen Verfahrens.

In einem weiteren Aspekt ist die erfindungsgemäße Anlage dadurch gekennzeichnet, dass Mittel umfasst werden, die es gestatten, dass mindestens ein Teil des überwiegend Kohlendioxid enthaltenden Stroms und mindestens ein Teil des methanhaltigen Fraktioniergasstroms zu einer ersten Verdichterstufe zugeführt und verdichtet werden und der verdichtete Strom zu der Dampfreformierungseinheit zurückgeführt und in diese eingeleitet wird und dass mindestens ein Teil des Kohlenmonoxid und Wasserstoff enthaltenden Flashgasstroms und mindestens ein Teil des Reinkohlenmonoxid-Produktgasstroms und mindestens ein Teil des PSA-Abgasstroms zu einer zweiten Verdichterstufe zugeführt und verdichtet werden und der verdichtete Strom zu der Trocknungseinheit zurückgeführt und in diese eingeleitet wird, wobei die zweite Verdichterstufe nicht in direkter Fluidverbindung mit der ersten Verdichterstufe steht. Die Vorteile dieses Aspekts der erfindungsgemäße Anlage entsprechen denen des achten Aspekts des erfindungsgemäßen Verfahrens.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
Fig. 1 ein erstes Beispiel eines Verfahrens bzw. einer Anlage zum Herstellen von reinem Kohlenmonoxid und Wasserstoff gemäß der Erfindung,
Fig. 2 ein zweites Beispiel eines Verfahrens bzw. einer Anlage zum Herstellen von reinem Kohlenmonoxid und Wasserstoff gemäß der Erfindung.

In der in Fig. 1 gezeigten, erfindungsgemäßen Ausgestaltung eines Verfahrens bzw. einer Anlage zum Herstellen von reinem Kohlenmonoxid und Wasserstoff wird über Leitung 11 ein Kohlenwasserstoffe, vorzugsweise Methan oder Naphtha, enthaltender Einsatzstrom einer Dampfreformierungseinheit 10 zugeführt und gemeinsam mit einem über Leitung 14 zugeführten Dampfstrom in diese eingeleitet. Über Leitungen 12 und 13 wird ein Teilstrom des Kohlenwasserstoffe enthaltenden Einsatzstroms als Brenngasstrom zu den Brennern (nicht bildlich dargestellt) der Dampfreformierungseinheit geleitet und dort mit einem über Leitung 15 herangeführten Luftstrom verbrannt, um die mit Reformierungskatalysator gefüllten, in der Dampfreformierungseinheit angeordneten Reformerrohre zu beheizen.

In der Dampfreformierungseinheit erfolgt ein mindestens teilweises Umsetzen der im Einsatzstrom enthaltenen Kohlenwasserstoffe mit Dampf unter Dampfreformierungsbedingungen in den mit Reformierungskatalysator gefüllten Reformerrohren zu einem Kohlenmonoxid, Wasserstoff, Wasser, Kohlendioxid und Methan enthaltenden Rohsynthesegasstrom, der über Leitung 16 aus der Dampfreformierungseinheit ausgeleitet und in eine Kohlendioxidabtrennungseinheit 20 eingeleitet wird. Diese kann nach einem an sich bekannten Verfahren zur Kohlendioxidabtrennung, beispielsweise mittels physikalischer oder chemischer Absorption oder Gaswäsche, ausgestaltet werden. Ein bekanntes und häufig angewendetes Verfahren ist das Rectisol-Verfahren, das eine Wäsche des Rohsynthesegases mit tiefkaltem Methanol als Absorbens umfasst und ebenfalls im oben genannten Schrifttum grundsätzlich beschrieben wird. Andere Waschverfahren bedienen sich anderer Wasch- oder Absorptionsmittel, beispielsweise N-Methylpyrrolidon (NMP), sekundäre Amine, z. B. Diethanolamin, tertiäre Amine, z. B. Methyldiethanolamin (MDEA), Polyethylenglycol-dialkylether, z. B. Polyethylenglycol-dimethylether. Da der der Dampfreformierungseinheit zugeführte Einsatzstrom in der Regel bereits entschwefelt wurde, kann die Kohlendioxidabtrennungseinheit hinsichtlich der Abtrennung von CO₂ ausgelegt bzw. optimiert werden.

Der an Kohlendioxid abgereicherte Synthesegasstrom wird über Leitung 21 aus der Kohlendioxidabtrennungseinheit ausgeleitet und in eine Trocknungseinheit 30 eingeleitet. Über Leitung 22 wird ein überwiegend Kohlendioxid enthaltender Strom aus der Kohlendioxidabtrennungseinheit ausgeleitet und mittels Leitung 23, einer zweistufigen Verdichtereinheit 60a, 60b sowie Leitungen 61 und 11 zum Eingang der Dampfreformierungseinheit zurückgeführt.

In der Trocknungseinheit wird der an Kohlendioxid abgereicherte Synthesegasstrom mittels Adsorption an einem Adsorbens auf Basis von Molekularsieben von Wasseranteilen sowie weiteren unerwünschten Spurenverunreinigungen, beispielsweise verbliebenen CO₂-Spuren, befreit, da diese in der nachfolgenden Tieftemperaturfraktionierung zur Bildung von Eis bzw. Trockeneis und somit zu Verstopfungen der dortigen Vorrichtungen führen würde. Auf diese Weise wird ein getrockneter Synthesegasstrom erhalten, der über Leitung 31 aus der Trocknungseinheit ausgeleitet und in eine mehrstufige Tieftemperaturfraktionierungseinheit 40 eingeleitet wird, die im vorliegenden Beispiel als Methanwäsche ausgestaltet ist. Die genannten Vorrichtungen bzw. Verfahrensstufen sind in einem gemeinsamen, mit Isoliermaterial gefüllten Gehäuse, der sog. Coldbox, untergebracht.

In der Tieftemperaturfraktionierungseinheit wird in einer ersten, der sogenannten Waschkolonne, der größte Teil des Wasserstoffs aus dem abgekühlten Rohsynthesegas durch Auswaschen der anderen Komponenten abgetrennt. Dabei wird ein an Wasserstoff angereicherter Gasstrom erhalten, der über Leitung 41 ausgeleitet wird. Als Lösungsmittel wird dabei unterkühltes und hochreines, flüssiges Methan verwendet, das zur Abfuhr der Lösungswärme mit verdampfendem CO gekühlt wird. In der nachfolgenden Wasserstoff-Strippkolonne wird das Sumpfprodukt der Waschkolonne von dem noch gelösten Wasserstoff befreit, wobei ein Kohlenmonoxid und Wasserstoff enthaltender Flashgasstrom als Kopfprodukt erhalten und über Leitung 43 ausgeleitet wird. Das CO/Methan-Sumpfprodukt der Wasserstoff-Strippkolonne wird in der nachfolgenden CO/Methan-Destillationskolonne aufgetrennt, wobei als Kopfprodukt ein Reinkohlenmonoxid-Produktgasstrom erhalten wird, das über Leitung 46 aus dem Verfahren ausgeleitet und einer nicht dargestellten Lagerung, Behandlung oder Weiterverarbeitung zugeführt wird. Das als Sumpfprodukt der CO/Methan-Destillationskolonne erhaltene Methan wird als methanhaltiger Fraktioniergasstrom über Leitung 44 aus der Tieftemperaturfraktionierungseinheit ausgeleitet und über Leitungen 22 und 23, einer zweistufigen Verdichtereinheit 60a, 60b sowie Leitungen 61 und 11 zum Eingang der Dampfreformierungseinheit zurückgeführt.

Über Leitung 41 wird der an Wasserstoff angereicherter Gasstrom aus der Tieftemperaturfraktionierungseinheit ausgeleitet und über Leitung 42 in eine Druckwechseladsorptionseinheit 50 eingeleitet. Zuvor dient der an Wasserstoff angereicherter Gasstrom zur Regenerierung des in der Trocknungseinheit verwendeten Adsorbens.

In der Druckwechseladsorptionseinheit wird ein Reinwasserstoff-Produktgasstrom erhalten, der über Leitung 51 aus dem Verfahren ausgeleitet und einer nicht dargestellten Lagerung, Behandlung oder Weiterverarbeitung zugeführt wird. Ferner wird ein PSA-Abgasstrom erhalten, der noch brennbare Bestandteile, beispielsweise Methan, enthält. Er wird über Leitung 52 aus der Druckwechseladsorptionseinheit ausgeleitet und kann einer nachfolgenden, Lagerung, Behandlung oder Weiterverarbeitung zugeführt werden. Aufgrund seines Heizwertes wird er im vorliegenden Ausführungsbeispiel als Brenngasstrom genutzt und über Leitungen 52 und 13 als weiterer Brenngasstrom den Brennern (nicht bildlich dargestellt) der Dampfreformierungseinheit zugeführt.

Gemäß der Erfindung wird einer, mehrere oder alle der nachfolgenden Stoffströme:
- der überwiegend Kohlendioxid enthaltende Strom, Leitung 22,
- der methanhaltige Fraktioniergasstrom, Leitung 44,
- der Kohlenmonoxid und Wasserstoff enthaltende Flashgasstrom, Leitung 43,
in eine Verdichtereinheit eingeleitet, die im vorliegenden Ausführungsbeispiel zwei parallel geschaltete Verdichterstufen 60a, 60b umfasst, wobei der mindestens eine Teil des einen oder der mehreren Ströme in eine oder in beide Verdichterstufen einleitet werden. Auf diese Weise können unterschiedliche Lastzustände bzw. Produktionskapazitäten des Verfahrens bzw. der Anlage realisiert werden. So ermöglicht die Ausgestaltung des Kreislaufverdichters als Verdichtereinheit mit zwei parallelen Verdichterstufen mit jeweils 50 % der Nennkapazität einen Kapazitätsbereich zwischen 50 % (Teillastbetrieb) und 100 % (Volllastbetrieb) und somit einen sehr flexiblen Betrieb der Synthesegaserzeugungsanlage.

Auf diese Weise wird ein verdichteter erster Rückführstrom erhalten, der über Leitung 61 aus der Verdichtereinheit ausgeleitet und in dem in Fig. 1 gezeigten Ausführungsbeispiel mindestens teilweise, bevorzugt überwiegend, meist bevorzugt vollständig über Leitungen 61 und 11 zu der Dampfreformierungseinheit zurückgeführt und in diese eingeleitet wird. Hierdurch wird die stoffliche Nutzung der in dem Rückführstrom enthaltenden Komponenten wie Wasserstoff, Kohlenoxide oder Methan verbessert. Gemäß der Verfahren des Stands der Technik würden diese Komponenten überwiegend thermisch genutzt werden, beispielsweise als weiteres Brenngas oder Heizgas für die Brenner der Dampfreformierungseinheit.

Das Ausführungsbeispiel der Fig. 1 kann dadurch abgewandelt werden, dass jeweils mindestens ein Teil des methanhaltige Fraktioniergasstrom, Leitung 44, und/oder des Kohlenmonoxid und Wasserstoff enthaltenden Flashgasstroms, Leitung 43, als weiteres Brenngas oder Heizgas über Leitung 13 den Brennern der Dampfreformierungseinheit über nicht gezeigte Verbindungsleitungen zugeführt wird. Hierdurch wird die Flexibilität des Verfahrens in besonderen Betriebszuständen bzw. Lastzustände oder beim Übergang zwischen zwei unterschiedlichen Betriebszuständen weiter erhöht, wobei dann vorübergehend akzeptiert wird, dass die in den Rückführströmen enthaltenden Komponenten wie Wasserstoff, Kohlenoxide oder Methan auch oder überwiegend thermisch anstatt stofflich genutzt werden.

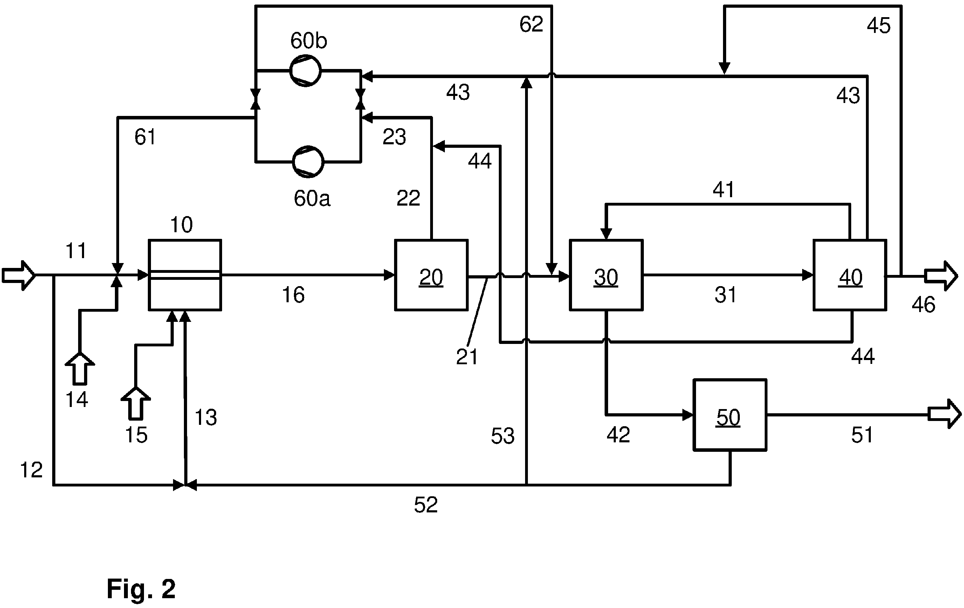

In der in Fig. 2 gezeigten, weiteren erfindungsgemäßen Ausgestaltung eines Verfahrens bzw. einer Anlage zum Herstellen von reinem Kohlenmonoxid und Wasserstoff umfasst die Verdichtereinheit ebenfalls zwei parallel geschaltete Verdichterstufen 60a, 60b, die nunmehr aber durch geeignete Absperrvorrichtungen, beispielsweise die in Fig. 2 angedeuteten, geschlossenen Ventile, strömungsmäßig voneinander getrennt sind und somit nicht in direkter Fluidverbindung zueinander stehen. Der Verdichterstufe 60a wird über Leitungen 22 und 23 der überwiegend Kohlendioxid enthaltenden Strom aus der Kohlendioxidabtrennungseinheit und über Leitungen 44 und 23 der der methanhaltige Fraktioniergasstrom zugeführt und dort verdichtet, wie es auch im Ausführungsbeispiel der Fig. 1 der Fall ist. Auf diese Weise werden die in diesen Rückführströmen enthaltenden Komponenten wie Wasserstoff, Kohlenoxide oder Methan weiterhin stofflich genutzt, um die Produktion der Zielkomponenten Rein-Kohlenmonoxid und Wasserstoff zu erhöhen.

Der Verdichterstufe 60b wird dagegen über Leitung 43 mindestens ein Teil des Kohlenmonoxid und Wasserstoff enthaltende Flashgasstroms und/oder über Leitungen 45 und 43 ein mindestens ein Teil des Reinkohlenmonoxid-Produktgasstroms und/oder über Leitungen 53 und 43 mindestens ein Teil des PSA-Abgasstroms zugeführt. Jede alternative oder additive Kombination der drei vorgenannten Ströme ist dabei prinzipiell möglich. Vorteilhaft ist es dabei, dass insbesondere bei einem Teillastbetrieb die jeweils nicht benötigten Verdichterstufen genutzt werden, um einen oder mehrere der vorgenannten Stoffströme zu der stromaufwärts der Tieftemperaturfraktionierungseinheit angeordneten-Trocknungseinheit zurückzuführen. Hierdurch wird im Teillastbetrieb eine künstliche Belastung der Tieftemperaturfraktionierungseinheit erzeugt, so dass die in der Coldbox enthaltenen Destillations- und Trennschritte einfacher geregelt und in stabilerer Weise betrieben werden können. Dazu ist es sinnvoll, die beiden oder mehreren Verdichterstufen, die somit unterschiedlichen Aufgaben dienen, durch Vorsehen von Ventile, Steckscheiben oder ähnlichen Mitteln gasdicht voneinander zu trennen, so dass zwischen ihnen keine direkte Fluidverbindung besteht. Auf diese Weise werden die jeweiligen Stoffströme getrennt gehalten, so dass eine unerwünschte Vermischung vermieden wird, die beispielsweise zu einem Einschleppen von Kohlendioxid in die Tieftemperaturfraktionierungseinheit führen würde, was durch die Bildung von Trockeneis dort zu Verstopfungen führen würde.

Auch im Ausführungsbeispiel der Fig. 2 ist wiederum eine Abwandlung dadurch möglich, dass jeweils mindestens ein Teil des methanhaltige Fraktioniergasstroms, Leitung 44, und/oder des Kohlenmonoxid und Wasserstoff enthaltenden Flashgasstroms, Leitung 43, und/oder des PSA-Abgasstroms als weiteres Brenngas oder Heizgas über Leitung 13 den Brennern der Dampfreformierungseinheit über nicht gezeigte Verbindungsleitungen zugeführt wird. Hierdurch wird die Flexibilität des Verfahrens in besonderen Betriebszuständen bzw. Lastzustände oder beim Übergang zwischen zwei unterschiedlichen Betriebszuständen weiter erhöht, wobei dann vorübergehend akzeptiert wird, dass die in den Rückführströmen enthaltenden Komponenten wie Wasserstoff, Kohlenoxide, insbesondere Kohlenmonoxid, oder Methan auch oder überwiegend thermisch anstatt stofflich genutzt werden.

Je nach gewünschter Produktionskapazität der Anlage können die beiden in Fig. 1 und Fig. 2 gezeigten Ausführungsbeispiele dadurch ineinander überführt werden, dass die Leitungswege der Leitungen 53 und 62 durch geeignete, nicht gezeigte Absperrvorrichtungen verschlossen werden. Zusätzlich kann die strömungsmäßige Trennung zwischen den beiden Verdichterstufen 60a, 60b durch Öffnen der bildlich angedeuteten Ventile optional aufgehoben werden. Auch die Möglichkeit zu einer solchen Überführung verschiedener Ausführungsbeispiele bzw. Betriebsarten ineinander mit geringem apparativem Aufwand gehört zu den Vorteilen des erfindungsgemäßen Verfahrens bzw. einer entsprechenden Anlage.

### Bezugszeichenliste

- [10]: Dampfreformierungseinheit
- [11] - [16]: Leitung
- [20]: Kohlendioxidabtrennungseinheit
- [21] - [23]: Leitung
- [30]: Trocknungseinheit
- [31]: Leitung
- [40]: Tieftemperaturfraktionierungseinheit
- [41] - [46]: Leitung
- [50]: Druckwechseladsorptionseinheit
- [51] - [53]: Leitung
- [60a], [60b]: Verdichterstufen
- [61] - [62]: Leitung

## Patentansprüche

1. Verfahren zum Herstellen von reinem Kohlenmonoxid und Wasserstoff aus einem Kohlenwasserstoffe, vorzugsweise Methan oder Naphtha, enthaltendem, gas- oder dampfförmigem Einsatzstrom, umfassend folgende Schritte:
(a) Einleiten des Kohlenwasserstoffe enthaltenden Einsatzstroms und eines Dampfstroms in eine Dampfreformierungseinheit und mindestens teilweises Umsetzen der im Einsatzstrom enthaltenen Kohlenwasserstoffe mit Dampf unter Dampfreformierungsbedingungen zu einem Kohlenmonoxid, Wasserstoff, Wasser, Kohlendioxid und Methan enthaltenden Rohsynthesegasstrom,
(b) Ausleiten des Rohsynthesegasstroms aus der Dampfreformierungseinheit und Einleiten desselben in eine Kohlendioxidabtrennungseinheit,
(c) Auftrennen des Rohsynthesegasstroms in der Kohlendioxidabtrennungseinheit unter Kohlendioxidabtrennungsbedingungen in einen überwiegend Kohlendioxid enthaltenden Strom und in einen an Kohlendioxid abgereicherten Synthesegasstrom, Ausleiten beider Ströme aus der Kohlendioxidabtrennungseinheit,
(d) Einleiten des an Kohlendioxid abgereicherten Synthesegasstroms in eine Trocknungseinheit, Ausleiten eines an Wasser abgereicherten, getrockneten Synthesegasstroms aus der Trocknungseinheit,
(e) Einleiten des getrockneten Synthesegasstroms in eine Tieftemperaturfraktionierungseinheit, mehrstufiges Auftrennen des getrockneten Synthesegasstroms unter Tieftemperaturfraktionierungsbedingungen in einen Reinkohlenmonoxid-Produktgasstrom, einen an Wasserstoff angereicherten Gasstrom, einen methanhaltigen Fraktioniergasstrom und einen Kohlenmonoxid und Wasserstoff enthaltenden Flashgasstrom, Ausleiten der beim mehrstufigen Auftrennen erhaltenen Gasströme aus der Tieftemperaturfraktionierungseinheit,
(f) Zuführen des an Wasserstoff angereicherten Gasstroms zu einer Druckwechseladsorptionseinheit (PSA), Auftrennen des an Wasserstoff angereicherten Gasstroms in der Druckwechseladsorptionseinheit in einen Reinwasserstoff-Produktgasstrom und einen PSA-Abgasstrom, Ausleiten beider Ströme aus der Druckwechseladsorptionseinheit,
(g) Zuführen mindestens eines Teils eines oder mehrerer Ströme, ausgewählt aus einer Gruppe, umfassend:
- den überwiegend Kohlendioxid enthaltenden Strom,
- den methanhaltigen Fraktioniergasstrom,
- den Kohlenmonoxid und Wasserstoff enthaltenden Flashgasstrom,
zu einer Verdichtereinheit, die mindestens zwei parallel geschaltete Verdichterstufen umfasst, wobei der mindestens eine Teil des einen oder der mehreren Ströme in eine oder in mehrere der Verdichterstufen einleitet werden,
(h) Ausleiten eines verdichteten ersten Rückführstroms aus der Verdichtereinheit.

2. Verfahren nach Anspruch 1, **dadurch gekennzeichnet, dass** mindestens ein Teil des verdichteten ersten Rückführstroms zu der Dampfreformierungseinheit zurückgeführt, in diese eingeleitet und mindestens teilweise unter Dampfreformierungsbedingungen umgesetzt wird.

3. Verfahren nach Anspruch 1 oder 2, **dadurch gekennzeichnet, dass** mindestens ein Teil des überwiegend Kohlendioxid enthaltenden Stroms zu einer ersten Verdichterstufe zugeführt und verdichtet wird und der verdichtete Strom zu der Dampfreformierungseinheit zurückgeführt, in diese eingeleitet und mindestens teilweise unter Dampfreformierungsbedingungen umgesetzt wird.

4. Verfahren nach einem der vorigen Ansprüche, **dadurch gekennzeichnet, dass** mindestens ein Teil des methanhaltigen Fraktioniergasstroms zu der ersten Verdichterstufe zugeführt und verdichtet wird und der verdichtete Strom zu der Dampfreformierungseinheit zurückgeführt, in diese eingeleitet und mindestens teilweise unter Dampfreformierungsbedingungen umgesetzt wird.

5. Verfahren nach einem der vorigen Ansprüche, **dadurch gekennzeichnet, dass** mindestens ein Teil des Kohlenmonoxid und Wasserstoff enthaltenden Flashgasstroms zu einer zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

6. Verfahren nach einem der vorigen Ansprüche, **dadurch gekennzeichnet, dass** mindestens ein Teil des Reinkohlenmonoxid-Produktgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

7. Verfahren nach einem der vorigen Ansprüche, **dadurch gekennzeichnet, dass** mindestens ein Teil des PSA-Abgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

8. Verfahren nach einem der vorigen Ansprüche, **dadurch gekennzeichnet, dass** mindestens ein Teil des überwiegend Kohlendioxid enthaltenden Stroms und mindestens ein Teil des methanhaltigen Fraktioniergasstroms zu einer ersten Verdichterstufe zugeführt und verdichtet werden und der verdichtete Strom zu der Dampfreformierungseinheit zurückgeführt, in diese eingeleitet und mindestens teilweise unter Dampfreformierungsbedingungen umgesetzt wird und dass mindestens ein Teil des Kohlenmonoxid und Wasserstoff enthaltenden Flashgasstroms und mindestens ein Teil des Reinkohlenmonoxid-Produktgasstroms und mindestens ein Teil des PSA-Abgasstroms zu einer zweiten Verdichterstufe zugeführt und verdichtet werden und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

9. Verfahren nach einem der vorigen Ansprüche, **dadurch gekennzeichnet, dass** mindestens ein Teil des an Wasserstoff angereicherten Gasstroms zur Regenerierung eines in der Trocknungseinheit angeordneten Trocknungsmittels verwendet wird, bevor er zu der Druckwechseladsorptionseinheit geleitet wird.

10. Anlage zum Herstellen von reinem Kohlenmonoxid und Wasserstoff aus einem Kohlenwasserstoffe, vorzugsweise Methan oder Naphtha, enthaltendem, gas- oder dampfförmigem Einsatzstrom, umfassend folgende Baugruppen und Anlagenbestandteile:
(a) eine Dampfreformierungseinheit, Mittel zum Einleiten des Kohlenwasserstoffe enthaltenden Einsatzstroms und eines Dampfstroms in die Dampfreformierungseinheit,
(b) Mittel zum Ausleiten des Rohsynthesegasstroms aus der Dampfreformierungseinheit, eine Kohlendioxidabtrennungseinheit und Mittel zum Einleiten des Rohsynthesegasstroms in die Kohlendioxidabtrennungseinheit,
(c) Mittel zum Ausleiten eines überwiegend Kohlendioxid enthaltenden Stroms und eines an Kohlendioxid abgereicherten Synthesegasstroms aus der Kohlendioxidabtrennungseinheit,
(d) eine Trocknungseinheit, Mittel zum Einleiten des an Kohlendioxid abgereicherten Synthesegasstroms in die Trocknungseinheit, Mittel zum Ausleiten eines an Wasser abgereicherten, getrockneten Synthesegasstroms aus der Trocknungseinheit,
(e) eine mehrere Trennstufen umfassende Tieftemperaturfraktionierungseinheit, Mittel zum Einleiten des getrockneten Synthesegasstroms in die Tieftemperaturfraktionierungseinheit, Mittel zum Ausleiten eines Reinkohlenmonoxid-Produktgasstroms, eines an Wasserstoff angereicherten Gasstroms, eines methanhaltigen Fraktioniergasstroms und eines Kohlenmonoxid und Wasserstoff enthaltenden Flashgasstroms aus der Tieftemperaturfraktionierungseinheit,
(f) eine Druckwechseladsorptionseinheit (PSA), Mittel zum Zuführen des an Wasserstoff angereicherten Gasstroms zu der Druckwechseladsorptionseinheit, Mittel zum Ausleiten eines Reinwasserstoff-Produktgasstroms und eines PSA-Abgasstroms aus der Druckwechseladsorptionseinheit,
(g) eine Verdichtereinheit, die mindestens zwei parallel geschaltete Verdichterstufen umfasst, Mittel zum Zuführen mindestens eines Teils eines oder mehrerer Ströme, ausgewählt aus einer Gruppe, umfassend:
- den überwiegend Kohlendioxid enthaltenden Strom,
- den methanhaltigen Fraktioniergasstrom,
- den Kohlenmonoxid und Wasserstoff enthaltenden Flashgasstrom,
zu der Verdichtereinheit, wobei die Mittel zum Zuführen so ausgestaltet sind, dass der mindestens eine Teil des einen oder der mehreren Ströme in eine oder in mehrere der Verdichterstufen einleitbar sind,
(h) Mittel zum Ausleiten eines verdichteten ersten Rückführstroms aus der Verdichtereinheit.

11. Anlage nach Anspruch 10, **dadurch gekennzeichnet, dass** Mittel umfasst werden, die es gestatten, dass mindestens ein Teil des verdichteten ersten Rückführstroms zu der Dampfreformierungseinheit zurückgeführt und in diese eingeleitet wird.

12. Anlage nach Anspruch 10 oder 11, **dadurch gekennzeichnet, dass** Mittel umfasst werden, die es gestatten, dass mindestens ein Teil des überwiegend Kohlendioxid enthaltenden Stroms zu einer ersten Verdichterstufe zugeführt und verdichtet wird und der verdichtete Strom zu der Dampfreformierungseinheit zurückgeführt und in diese eingeleitet wird.

13. Anlage nach einem der vorigen Ansprüche, **dadurch gekennzeichnet, dass** Mittel umfasst werden, die es gestatten, dass mindestens ein Teil des methanhaltigen Fraktioniergasstroms zu der ersten Verdichterstufe zugeführt und verdichtet wird und der verdichtete Strom zu der Dampfreformierungseinheit zurückgeführt und in diese eingeleitet wird.

14. Anlage nach einem der vorigen Ansprüche, **dadurch gekennzeichnet, dass** Mittel umfasst werden, die es gestatten, dass mindestens ein Teil des Kohlenmonoxid und Wasserstoff enthaltenden Flashgasstroms zu einer zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

15. Anlage nach einem der vorigen Ansprüche, **dadurch gekennzeichnet, dass** Mittel umfasst werden, die es gestatten, dass mindestens ein Teil des Reinkohlenmonoxid-Produktgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

16. Anlage nach einem der vorigen Ansprüche, **dadurch gekennzeichnet, dass** Mittel umfasst werden, die es gestatten, dass mindestens ein Teil des PSA-Abgasstroms zu der zweiten Verdichterstufe zugeführt und verdichtet wird und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

17. Anlage nach einem der vorigen Ansprüche, **dadurch gekennzeichnet, dass** Mittel umfasst werden, die es gestatten, dass mindestens ein Teil des überwiegend Kohlendioxid enthaltenden Stroms und mindestens ein Teil des methanhaltigen Fraktioniergasstroms zu einer ersten Verdichterstufe zugeführt und verdichtet werden und der verdichtete Strom zu der Dampfreformierungseinheit zurückgeführt und in diese eingeleitet wird und dass mindestens ein Teil des Kohlenmonoxid und Wasserstoff enthaltenden Flashgasstroms und mindestens ein Teil des Reinkohlenmonoxid-Produktgasstroms und mindestens ein Teil des PSA-Abgasstroms zu einer zweiten Verdichterstufe zugeführt und verdichtet werden und der verdichtete Strom zu der Trocknungseinheit zurückgeführt und in diese eingeleitet wird, wobei die zweite Verdichterstufe nicht in direkter Fluidverbindung mit der ersten Verdichterstufe steht.

## Claims

1. Process for the production of pure carbon monoxide and hydrogen from a gaseous or vaporous input stream containing hydrocarbons, preferably methane or naphtha, comprising the following steps:
(a) introducing the hydrocarbons-containing input stream and a steam stream into a steam reforming unit and at least partially converting the hydrocarbons present in the input stream with steam under steam reforming conditions to afford a raw synthesis gas stream containing carbon monoxide, hydrogen, water, carbon dioxide and methane,
(b) discharging the raw synthesis gas stream from the steam reforming unit and introducing same into a carbon dioxide removal unit,
(c) resolving the raw synthesis gas stream in the carbon dioxide removal unit under carbon dioxide removal conditions into a predominantly carbon dioxide-containing stream and into a carbon dioxide-depleted synthesis gas stream, discharging both streams from the carbon dioxide removal unit,
(d) introducing the carbon dioxide-depleted synthesis gas stream into a drying unit, discharging a water-depleted, dried synthesis gas stream from the drying unit,
(e) introducing the dried synthesis gas stream into a low-temperature fractionation unit, multistage resolution of the dried synthesis gas stream under low-temperature fractionation conditions into a pure carbon monoxide product gas stream, a hydrogen-enriched gas stream, a methane-containing fractionation gas stream and a carbon monoxide- and hydrogen-containing flash gas stream, discharging the gas streams obtained in the multistage resolution from the low-temperature fractionation unit,
(f) supplying the hydrogen-enriched gas stream to a pressure swing adsorption unit (PSA), resolving the hydrogen-enriched gas stream in the pressure swing adsorption unit into a pure hydrogen product gas stream and a PSA offgas stream, discharging both streams from the pressure swing adsorption unit,
(g) supplying at least a portion of one or more streams selected from a group comprising:
- the predominantly carbon dioxide-containing stream,
- the methane-containing fractionation gas stream,
- the carbon monoxide- and hydrogen-containing flash gas stream,
to a compressor unit which comprises at least two compressor stages connected in parallel, wherein the at least a portion of the one or more streams is introduced to one or more of the compressor stages,
(h) discharging a compressed first recycle stream from the compressor unit.

2. Process according to Claim 1, **characterized in that** at least a portion of the compressed first recycle stream is recycled to the steam reforming unit, introduced thereto and at least partially converted under steam reforming conditions.

3. Process according to Claim 1 or 2, **characterized in that** at least a portion of the predominantly carbon dioxide-containing stream is supplied to a first compressor stage and compressed and the compressed stream is recycled to the steam reforming unit, introduced thereto and at least partially converted under steam reforming conditions.

4. Process according to any of the preceding claims, **characterized in that** at least a portion of the methane-containing fractionation gas stream is supplied to the first compressor stage and compressed and the compressed stream is recycled to the steam reforming unit, introduced thereto and at least partially converted under steam reforming conditions.

5. Process according to any of the preceding claims, **characterized in that** at least a portion of the carbon monoxide- and hydrogen-containing flash gas stream is supplied to a second compressor stage and compressed and the compressed stream is recycled to the drying unit and introduced thereto, wherein the second compressor stage is not in direct fluid connection with the first compressor stage.

6. Process according to any of the preceding claims, **characterized in that** at least a portion of the pure carbon monoxide product gas stream is supplied to the second compressor stage and compressed and the compressed stream is recycled to the drying unit and introduced thereto, wherein the second compressor stage is not in direct fluid connection with the first compressor stage.

7. Process according to any of the preceding claims, **characterized in that** at least a portion of the PSA offgas stream is supplied to the second compressor stage and compressed and the compressed stream is recycled to the drying unit and introduced thereto, wherein the second compressor stage is not in direct fluid connection with the first compressor stage.

8. Process according to any of the preceding claims, **characterized in that** at least a portion of the predominantly carbon dioxide-containing stream and at least a portion of the methane-containing fractionation gas stream are supplied to a first compressor stage and compressed and the compressed stream is recycled to the steam reforming unit, introduced thereto and at least partially converted under steam reforming conditions and **in that** at least a portion of the carbon monoxide- and hydrogen-containing flash gas stream and at least a portion of the pure carbon monoxide product gas stream and at least a portion of the PSA offgas stream are supplied to a second compressor stage and compressed and the compressed stream is recycled to the drying unit and introduced thereto, wherein the second compressor stage is not in direct fluid connection with the first compressor stage.

9. Process according to any of the preceding claims, **characterized in that** at least a portion of the hydrogen-enriched gas stream is used for regenerating a drying medium arranged in the drying unit before it is passed to the pressure swing adsorption unit.

10. Plant for the production of pure carbon monoxide and hydrogen from a gaseous or vaporous input stream containing hydrocarbons, preferably methane or naphtha, comprising the following assemblies and plant constituents:
(a) a steam reforming unit, means for introducing the hydrocarbons-containing input stream and a steam stream into the steam reforming unit,
(b) means for discharging the raw synthesis gas stream from the steam reforming unit, a carbon dioxide removal unit and means for introducing the raw synthesis gas stream into the carbon dioxide removal unit,
(c) means for discharging a predominantly carbon dioxide-containing stream and a carbon dioxide-depleted synthesis gas stream from the carbon dioxide removal unit,
(d) a drying unit, means for introducing the carbon dioxide-depleted synthesis gas stream into the drying unit, means for discharging a water-depleted, dried synthesis gas stream from the drying unit,
(e) a low-temperature fractionation unit comprising a plurality of separation stages, means for introducing the dried synthesis gas stream into the low-temperature fractionation unit, means for discharging a pure carbon monoxide product gas stream, a hydrogen-enriched gas stream, a methane-containing fractionation gas stream and a carbon monoxide- and hydrogen-containing flash gas stream from the low-temperature fractionation unit,
(f) a pressure swing adsorption unit (PSA), means for supplying the hydrogen-enriched gas stream to the pressure swing adsorption unit, means for discharging a pure hydrogen product gas stream and a PSA offgas stream from the pressure swing adsorption unit,
(g) a compressor unit comprising at least two compressor stages connected in parallel, means for supplying at least a portion of one or more streams selected from a group comprising:
- the predominantly carbon dioxide-containing stream,
- the methane-containing fractionation gas stream,
- the carbon monoxide- and hydrogen-containing flash gas stream,
to the compressor unit, wherein the means for supplying are configured such that the at least a portion of the one or more streams is introduceable to one or more of the compressor stages,
(h) means for discharging a compressed first recycle stream from the compressor unit.

11. Plant according to Claim 10, **characterized in that** it comprises means that make it possible for at least a portion of the compressed first recycle stream to be recycled to the steam reforming unit and introduced thereto.

12. Plant according to Claim 10 or 11, **characterized in that** it comprises means that make it possible for at least a portion of the predominantly carbon dioxide-containing stream to be supplied to a first compressor stage and compressed and the compressed stream to be recycled to the steam reforming unit and introduced thereto.

13. Plant according to any of the preceding claims, **characterized in that** it comprises means that make it possible for at least a portion of the methane-containing fractionation gas stream to be supplied to the first compressor stage and compressed and the compressed stream to be recycled to the steam reforming unit and introduced thereto.

14. Plant according to any of the preceding claims, **characterized in that** it comprises means which make it possible for at least a portion of the carbon monoxide- and hydrogen-containing flash gas stream to be supplied to a second compressor stage and compressed and the compressed stream to be recycled to the drying unit and introduced thereto, wherein the second compressor stage is not in direct fluid connection with the first compressor stage.

15. Plant according to any of the preceding claims, **characterized in that** it comprises means which make it possible for at least a portion of the pure carbon monoxide product gas stream to be supplied to the second compressor stage and compressed and the compressed stream to be recycled to the drying unit and introduced thereto, wherein the second compressor stage is not in direct fluid connection with the first compressor stage.

16. Plant according to any of the preceding claims, **characterized in that** it comprises means which make it possible for at least a portion of the PSA offgas stream to be supplied to the second compressor stage and compressed and the compressed stream to be recycled to the drying unit and introduced thereto, wherein the second compressor stage is not in direct fluid connection with the first compressor stage.

17. Plant according to any of the preceding claims, **characterized in that** it comprises means which make it possible for at least a portion of the predominantly carbon dioxide-containing stream and at least a portion of the methane-containing fractionation gas stream to be supplied to a first compressor stage and compressed and the compressed stream to be recycled to the steam reforming unit and introduced thereto and for at least a portion of the carbon monoxide- and hydrogen-containing flash gas stream and at least a portion of the pure carbon monoxide product gas stream and at least a portion of the PSA offgas stream to be supplied to a second compressor stage and compressed and the compressed stream to be recycled to the drying unit and introduced thereto, wherein the second compressor stage is not in direct fluid connection with the first compressor stage.

## Revendications

1. Procédé de production de monoxyde de carbone pur et d'hydrogène à partir d'un courant de charge gazeux ou sous forme vapeur, contenant des hydrocarbures, de préférence du méthane ou du naphta, comprenant les étapes suivantes :
(a) introduction du courant de charge contenant des hydrocarbures et d'un courant de vapeur dans une unité de vaporeformage et réaction au moins partielle des hydrocarbures contenus dans le courant de charge avec de la vapeur dans des conditions de vaporeformage, conduisant à un courant de gaz de synthèse brut contenant du monoxyde de carbone, de l'hydrogène, de l'eau, du dioxyde de carbone et du méthane,
(b) évacuation du courant de gaz de synthèse brut de l'unité de vaporeformage et son introduction dans une unité de séparation de dioxyde de carbone,
(c) séparation du courant de gaz de synthèse brut dans l'unité de séparation de dioxyde de carbone dans des conditions de séparation du dioxyde de carbone en un courant contenant essentiellement du dioxyde de carbone et un courant de gaz de synthèse appauvri en dioxyde de carbone, évacuation des deux courants de l'unité de séparation du dioxyde de carbone,
(d) introduction du courant de gaz de synthèse appauvri en dioxyde de carbone dans une unité de séchage, évacuation d'un courant de gaz de synthèse séché appauvri en eau de l'unité de séchage,
(e) introduction du courant de gaz de synthèse séché dans une unité de fractionnement à basse température, séparation en plusieurs étages du courant de gaz de synthèse séché dans des conditions de fractionnement à basse température, en un courant de gaz produit monoxyde de carbone pur, un courant gazeux contenant de l'hydrogène, un courant de gaz de fractionnement contenant du méthane et un courant de vapeur instantanée contenant du monoxyde de carbone et de l'hydrogène, évacuation des courants gazeux obtenus lors de la séparation en plusieurs étages de l'unité de fractionnement à basse température,
(f) envoi du courant gazeux enrichi en hydrogène à une unité d'adsorption à pression modulée (APM), séparation du courant gazeux enrichi en hydrogène dans l'unité d'adsorption à pression modulée en un courant de gaz produit hydrogène pur et un courant d'effluent gazeux d'APM, évacuation des deux courants de l'unité d'adsorption à pression modulée,
(g) envoi d'au moins une partie d'un ou plusieurs courants choisis dans un groupe comprenant :
- le courant contenant essentiellement du dioxyde de carbone,
- le courant de gaz de fractionnement contenant du méthane,
- le courant de vapeur instantanée contenant du monoxyde de carbone et de l'hydrogène,
à une unité de compresseur, qui comprend au moins deux étages de compresseur montés en parallèle, l'au moins une partie de l'un ou plusieurs courants étant introduite dans un ou plusieurs des étages de compresseur,
(h) évacuation, de l'unité de compresseur, d'un premier courant de retour comprimé.

2. Procédé selon la revendication 1, **caractérisé en ce qu'**au moins une partie du premier courant de retour comprimé est renvoyée à l'unité de vaporeformage, y est introduite et est au moins partiellement mise à réagir dans les conditions d'un vaporeformage.

3. Procédé selon la revendication 1 ou 2, **caractérisé en ce qu'**au moins une partie du courant contenant essentiellement du dioxyde de carbone est envoyée à un premier étage de compresseur et est comprimée et le courant comprimé est renvoyé à l'unité de vaporeformage, y est introduit et est au moins partiellement mis à réagir dans les conditions d'un vaporeformage.

4. Procédé selon l'une des revendications précédentes, **caractérisé en ce qu'**au moins une partie du courant de gaz de fractionnement contenant du méthane est envoyée au premier étage de compresseur et est comprimée et le courant comprimé est renvoyé à l'unité de vaporeformage, y est introduit et est au moins partiellement mis à réagir dans les conditions d'un vaporeformage.

5. Procédé selon l'une des revendications précédentes, **caractérisé en ce qu'**au moins une partie du gaz de vapeur instantanée contenant du monoxyde de carbone et de l'hydrogène est envoyée à un second étage de compresseur et est comprimée et le courant comprimé est renvoyé à l'unité de séchage et y est introduit, le second étage de compresseur n'étant pas en liaison fluidique directe avec le premier étage de compresseur.

6. Procédé selon l'une des revendications précédentes, **caractérisé en ce qu'**au moins une partie du courant de gaz produit monoxyde de carbone pur est envoyée au second étage de compresseur et est comprimée et le courant comprimé est renvoyé à l'unité de séchage et y est introduit, le second étage de compresseur n'étant pas en liaison fluidique directe avec le premier étage de compresseur.

7. Procédé selon l'une des revendications précédentes, **caractérisé en ce qu'**au moins une partie du courant d'effluent gazeux d'APM est envoyée au second étage de compresseur et est comprimée et le courant comprimé est renvoyé à l'unité de séchage et y est introduit, le second étage de compresseur n'étant pas en liaison fluidique directe avec le premier étage de compresseur.

8. Procédé selon l'une des revendications précédentes, **caractérisé en ce qu'**au moins une partie du courant contenant essentiellement du dioxyde de carbone et au moins une partie du courant de gaz de fractionnement contenant du méthane sont envoyées à un premier étage de compresseur et sont comprimées et le courant comprimé est renvoyé à l'unité de vaporeformage, y est introduit et est au moins partiellement mis à réagir dans les conditions d'un vaporeformage, et **en ce qu'**au moins une partie du courant de vapeur instantanée contenant du monoxyde de carbone et de l'hydrogène et au moins une partie du courant de gaz produit monoxyde de carbone pur et au moins une partie du courant d'effluent gazeux d'APM sont envoyées à un second étage de compresseur et sont comprimées et le courant comprimé est renvoyé à l'unité de séchage et y est introduit, le second étage de compresseur n'étant pas en liaison fluidique directe avec le premier étage de compresseur.

9. Procédé selon l'une des revendications précédentes, **caractérisé en ce qu'**au moins une partie du courant gazeux enrichi en hydrogène est utilisée pour la régénération d'un agent déshydratant disposé dans l'unité de séchage, avant d'être envoyée à l'unité d'adsorption à pression modulée.

10. Installation destinée à la production de monoxyde de carbone pur et d'hydrogène à partir d'un courant de charge gazeux ou sous forme vapeur, contenant des hydrocarbures, de préférence du méthane ou du naphta, comprenant les ensembles et éléments d'installation suivants :
(a) une unité de vaporeformage, un moyen pour introduire le courant de charge contenant des hydrocarbures et un courant de vapeur dans l'unité de vaporeformage,
(b) un moyen pour évacuer le courant de gaz de synthèse brut de l'unité de vaporeformage, une unité de séparation du dioxyde de carbone et un moyen pour introduire le courant de gaz de synthèse brut dans l'unité de séparation du dioxyde de carbone,
(c) un moyen pour évacuer, de l'unité de séparation du dioxyde de carbone, un courant contenant essentiellement du dioxyde de carbone et un courant de gaz de synthèse appauvri en dioxyde de carbone,
(d) une unité de séchage, un moyen pour introduire le courant de gaz de synthèse appauvri en dioxyde de carbone dans l'unité de séchage, un moyen pour évacuer, de l'unité de séchage, un courant de gaz de synthèse séché, appauvri en eau,
(e) une unité de fractionnement à basse température comprenant plusieurs étages de séparation, un moyen pour introduire le courant de gaz de synthèse séché dans l'unité de fractionnement à basse température, un moyen pour évacuer, de l'unité de fractionnement à basse température, un courant de gaz produit monoxyde de carbone pur, un courant gazeux enrichi en hydrogène, un courant de gaz de fractionnement contenant du méthane et un courant de vapeur instantanée contenant du monoxyde de carbone et de l'eau,
(f) une unité d'adsorption à pression modulée (APM), un moyen pour envoyer le courant gazeux enrichi en hydrogène à l'unité d'adsorption à pression modulée, un moyen pour évacuer, de l'unité d'adsorption à pression modulée, un courant de gaz produit hydrogène pur et un courant d'effluent gazeux d'APM,
(g) une unité de compresseur, qui comprend au moins deux étages de compresseur montés en parallèle, un moyen pour envoyer au moins une partie d'un ou plusieurs courants, choisis dans un groupe comprenant :
- le courant contenant essentiellement du dioxyde de carbone,
- le courant de gaz de fractionnement contenant du méthane,
- le courant de vapeur instantanée contenant du monoxyde de carbone et de l'hydrogène,
à l'unité de compresseur, les moyens d'envoi étant conçus de façon qu'au moins une partie du ou des courants puisse être introduite dans un ou plusieurs des étages de compresseur,
(h) un moyen pour évacuer de l'unité de compresseur un premier courant de retour comprimé.

11. Installation selon la revendication 10, **caractérisée en ce qu'**il comprend des moyens qui permettent de renvoyer au moins une partie du premier courant de retour comprimé à l'unité de vaporeformage et de l'y introduire.

12. Installation selon la revendication 10 ou 11, **caractérisée en ce qu'**elle comprend des moyens qui permettent qu'au moins une partie du courant contenant essentiellement du dioxyde de carbone soit envoyée à un premier étage de compresseur et y soit comprimée, et que le courant comprimé soit renvoyé à l'unité de vaporeformage et y soit introduit.

13. Installation selon l'une des revendications précédentes, **caractérisée en ce qu'**elle comprend des moyens qui permettent qu'au moins une partie du courant de gaz de fractionnement contenant du méthane soit envoyée au premier étage de compresseur et soit comprimée et que le courant comprimé soit renvoyé à l'unité de vaporeformage et y soit introduit.

14. Installation selon l'une des revendications précédentes, **caractérisée en ce qu'**elle comprend des moyens qui permettent qu'au moins une partie du courant de vapeur instantanée contenant du monoxyde de carbone et de l'eau soit envoyée à un second étage de compresseur et soit comprimée et que le courant comprimé soit renvoyé à l'unité de séchage et y soit introduit, le second étage de compresseur n'étant pas en liaison fluidique directe avec le premier étage de compresseur.

15. Installation selon l'une des revendications précédentes, **caractérisée en ce qu'**elle comprend des moyens qui permettent qu'au moins une partie du courant de gaz produit monoxyde de carbone pur soit envoyée au second étage de compresseur et soit comprimée et que le courant comprimé soit renvoyé à l'unité de séchage et y soit introduit, le second étage de compresseur n'étant pas en liaison fluidique directe avec le premier étage de compresseur.

16. Installation selon l'une des revendications précédentes, **caractérisée en ce qu'**elle comprend des moyens qui permettent qu'au moins une partie du courant d'effluent gazeux de l'APM soit envoyée au second étage de compresseur et soit comprimée et que le courant comprimé soit renvoyé à l'unité de séchage et y soit introduit, le second étage de compresseur n'étant pas en liaison fluidique directe avec le premier étage de compresseur.

17. Installation selon l'une des revendications précédentes, **caractérisée en ce qu'**elle comprend des moyens qui permettent qu'au moins une partie du courant contenant essentiellement du monoxyde de carbone et au moins une partie du courant de gaz de fractionnement contenant du méthane soient envoyées à un premier étage de compresseur et soient comprimées et que le courant comprimé soit renvoyé à l'unité de vaporeformage et y soit introduit, et **en ce qu'**au moins une partie du courant de vapeur instantanée contenant du monoxyde de carbone et de l'hydrogène et au moins une partie du courant de gaz produit monoxyde de carbone pur et au moins une partie du courant d'effluent gazeux de l'APM soient envoyées à un second étage de compresseur et soient comprimées et que le courant comprimé soit renvoyé à l'unité de séchage et y soit introduit, le second étage de compresseur n'étant pas en liaison fluidique directe avec le premier étage de compresseur.
